# EUROPEAN PATENT APPLICATION

(11) **EP 3 683 038 A2**
(43) Date of publication of application: **22.07.2020**
(21) Application number: 20150027.9
(22) Date of filing: 02.01.2020
(51) Int. Cl.: B29C 64/106, B29C 64/393, B33Y 10/00, B33Y 30/00, B33Y 50/02

(54) **FABRICATING APPARATUS, FABRICATING SYSTEM, FABRICATING METHOD, AND CARRIER MEDIUM**

(30) Priority: 17.01.2019 JP 2019005902
(71) Applicant: Ricoh Company, Ltd., Tokyo 143-8555 (JP)
(72) Inventor: TAKANO, Yohei, Tokyo 143-8555 (JP); YOROZU, Yasuaki, Tokyo 143-8555 (JP); NAGATSUKA, Shingo, Tokyo 143-8555 (JP)
(74) Representative: SSM Sandmair

(57) **Abstract**

A fabricating apparatus (100) for fabricating a three-dimensional object includes a fabricating device (206), a measuring unit (340), and a correction unit (350). The fabricating device (206) is configured to fabricate a fabrication layer based on fabrication data of the three-dimensional object. The measuring unit (340) is configured to measure a shape of the fabrication layer. The correction unit (350) is configured to correct an operation of fabricating another fabrication layer above the fabrication layer, based on a height of the fabrication layer measured by the measuring unit (340).

## Description

### BACKGROUND

### Technical Field

The present disclosure relates to a fabricating apparatus, a fabricating system, a fabricating method, and a carrier medium.

### Related Art

A fabricating apparatus (so-called "3D printer") that fabricates a three-dimensional object based on input data has been developed. As the method of performing three-dimensional fabrication, there have been proposed, for example, fused filament fabrication (FFF), selective laser sintering (SLS), material jetting (MJ), electron beam melting (EBM), and stereolithography apparatus (SLA).

However, a desired three-dimensional object may not be fabricated, and correction processing needs to be performed in the fabricating process.

As a technique for performing correction processing in fabrication, for example, JP-2016-107462-A discloses a technique of comparing the width of a line-shaped object that has been fabricated in advance with the predicted value of the line width to set discharge parameters.

However, the technique of JP-2016-107462-A in which correction is performed based on the previous fabricating result cannot cope with deformation when the fabrication object is deformed in the process of fabrication or when a layered object is fabricated, thus hampering sufficient correction to be performed.

### SUMMARY

In light of the above-described problem, a purpose of the present disclosure is to provide a fabricating apparatus, a fabricating system, a fabricating method, and a carrier medium carrying program code that fabricate a desired three-dimensional object.

In an aspect of the present disclosure, there is provided a fabricating apparatus for fabricating a three-dimensional object includes a fabricating device, a measuring unit, and a correction unit. The fabricating device is configured to fabricate a fabrication layer based on fabrication data of the three-dimensional object. The measuring unit is configured to measure a shape of the fabrication layer. The correction unit is configured to correct an operation of fabricating another fabrication layer above the fabrication layer, based on a height of the fabrication layer measured by the measuring unit.

In another aspect of the present disclosure, there is provided a system for fabricating a three-dimensional object. The system includes the fabricating apparatus.

In still another aspect of the present disclosure, there is provided a method for fabricating a three-dimensional object. The method includes fabricating, measuring, and correcting. The fabricating fabricates a fabrication layer based on fabrication data of the three-dimensional object. The measuring measures a shape of the fabrication layer. The correcting corrects an operation of fabricating another fabrication layer above the fabrication layer to fabricate said another fabrication layer.

In still yet another aspect of the present disclosure, there is provided a carrier medium carrying computer readable program code for controlling an apparatus for fabricating a three-dimensional object to carry out the method.

As described above, according to the present disclosure, there can be provided a fabricating apparatus, a fabricating system, a fabricating method, and a carrier medium carrying program code that fabricate a desired three-dimensional object.

### BRIEF DESCRIPTION OF THE DRAWINGS

The aforementioned and other aspects, features, and advantages of the present disclosure would be better understood by reference to the following detailed description when considered in connection with the accompanying drawings, wherein:
FIGS. 1A to 1C are illustrations of a schematic configuration of an entire three-dimensional fabricating system according to an embodiment of the present disclosure;
FIG. 2 is a diagram of a hardware configuration of a fabricating apparatus according to the embodiment illustrated in FIGS. 1A to 1C;
FIG. 3 is a block diagram of software included in the fabricating apparatus according to the embodiment illustrated in FIGS. 1A to 1C;
FIG. 4 is a flowchart of a process in which the fabricating apparatus fabricates a three-dimensional object in the embodiment illustrated in FIGS. 1A to 1C;
FIGS. 5A and 5B are illustrations of the measurement of the height of a three-dimensional object in the embodiment illustrated in FIGS. 1A to 1C;
FIG. 6 is a flowchart of a process of correcting operation parameters by a dummy fabricating process in the embodiment illustrated in FIGS. 1A to 1C;
FIGS. 7A and 7B are illustrations of examples of correction of lamination thickness in the embodiment illustrated in FIGS. 1A to 1C;
FIGS. 8A and 8B-1 to 8B-3 are illustrations of the height distribution on a surface of a fabrication layer in fabricating a three-dimensional object;
FIGS. 9A to 9C are diagrams of the correction of a fabrication layer based on the height distribution in the embodiment illustrated in FIGS. 1A to 1C;
FIGS. 10A to 10C are diagrams of the correction of a fabrication start end and a fabrication finish end in the embodiment illustrated in FIGS. 1A to 1C;
FIGS. 11A and 11B are diagrams of the shapes of ends under control of filament supply speed in the embodiment illustrated in FIGS. 1A to 1C; and
FIGS. 12A to 12D are diagrams of correction of a moving path of a head in the embodiment illustrated in FIGS. 1A to 1C.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Although the embodiments are described with technical limitations with reference to the attached drawings, such description is not intended to limit the scope of the disclosure and all of the components or elements described in the embodiments of this disclosure are not necessarily indispensable.

Referring now to the drawings, embodiments of the present disclosure are described below. In the drawings for explaining the following embodiments, the same reference codes are allocated to elements (members or components) having the same function or shape and redundant descriptions thereof are omitted below.

Although embodiments of the present disclosure are described below, the embodiments are not limited to the embodiments described below. In the drawings referred below, the same reference codes are used for the common elements, and the description thereof are omitted as appropriate. The following descriptions are given of mainly a fabricating apparatus of a fused filament fabrication (FFF) system. However, embodiments of the present disclosure are not limited to the fabricating apparatus of the FFF system.

In the following description, the height direction of a three-dimensional object is referred to as z-axis direction, and a plane orthogonal to the z-axis direction is referred to as xy plane for convenience of explanation.

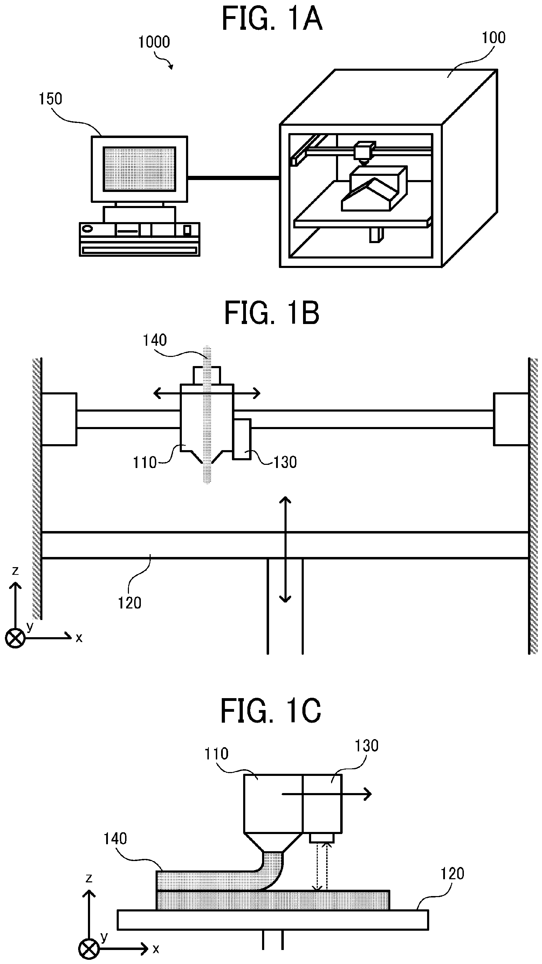

FIGS. 1A to 1C are illustrations of a schematic configuration of an entire three-dimensional fabricating system according to an embodiment of the present disclosure. As illustrated in FIG. 1A, a three-dimensional fabricating system 1000 according to the present embodiment includes a fabricating apparatus 100 that fabricates a three-dimensional object. The fabricating apparatus 100 receives the shape data of a three-dimensional object to be fabricated from, for example, an information processing terminal 150 and fabricates the three-dimensional object based on the shape data. The information processing terminal 150 may operate as a controller that controls a process executed by the fabricating apparatus 100. The fabricating apparatus 100 may incorporate a function of the information processing terminal 150.

In the fabricating apparatus 100, as illustrated in FIG. 1B, a fabrication material 140 is discharged onto a stage 120 from a nozzle of a head 110 that is movable in parallel with the xy plane, and a fabrication layer is fabricated on the xy plane. The head 110 includes, for example, a heater that melts filament of the wire-shaped fabrication material 140 and an extruder that supplies the filament.

The fabricating apparatus 100 draws line drawing of the fabrication material 140 in the same plane to fabricate a fabrication layer corresponding to one layer of a three-dimensional object. When the first fabrication layer is fabricated, the stage 120 is lowered by the height (lamination pitch or layer pitch) of one layer in a direction along the z axis. Then, the fabricating apparatus 100 drives the head 110 in the same manner as for the first fabrication layer to form a second fabrication layer. The fabricating apparatus 100 repeats the above-described operation to laminate fabrication layers and fabricate the three-dimensional object. In the above description, the fabricating apparatus 100 is described with an example of the configuration of moving the head 110 in the xy plane and moving the stage 120 in the z-axis direction. However, the configuration of the fabricating apparatus 100 is not limited to the above-described configuration in the present embodiment but may be any other suitable configuration.

The fabricating apparatus 100 according to the present embodiment includes a sensor 130 to measure the shape of a fabrication layer during fabrication or the shape of a three-dimensional object after fabrication. The sensor 130 can measure, for example, the shape of the fabrication layer on the xy plane and the dimension (height) of the three-dimensional object in the z-axis direction based on the upper surface of the stage 120. As illustrated in FIG. 1C, in some embodiments, the sensor 130 may measure the shape of the fabrication layer during fabrication, for example, in conjunction with the fabricating operation by the head 110. The three-dimensional object may also be measured each time one fabrication layer is fabricated. Further, the timing and range of the measurement of the three-dimensional object may be arbitrarily selected and are not particularly limited to the above-described embodiment.

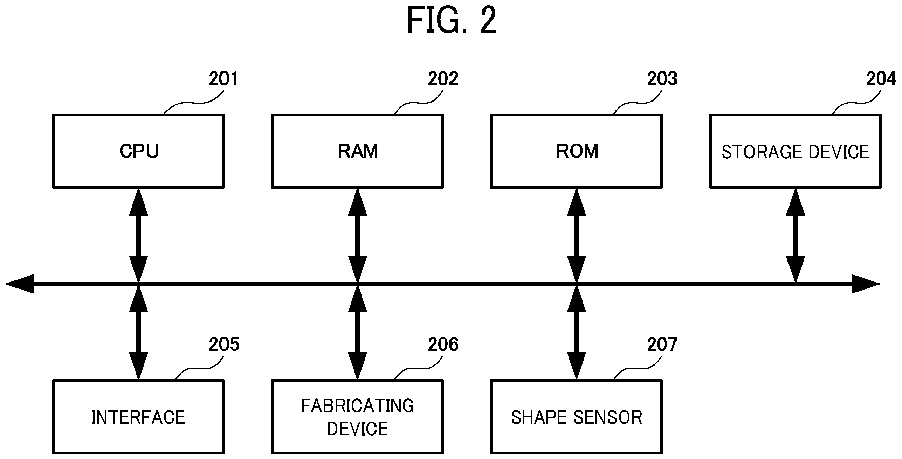

Next, a hardware configuration of the fabricating apparatus 100 is described below. FIG. 2 is a diagram of a hardware configuration of the fabricating apparatus 100 according to the present embodiment. As illustrated in FIG. 2, the fabricating apparatus 100 includes a central processing unit (CPU) 201, a random access memory (RAM) 202, a read only memory (ROM) 203, a storage device 204, an interface 205, a fabricating device 206, and a shape sensor 207. Such hardware components are connected via a bus.

The CPU 201 is a device that executes programs to control operations of the fabricating apparatus 100 and performs predetermined processing. The RAM 202 is a volatile storage device to provide an execution space of programs executed by the CPU 201 and is used to store and expand programs and data. The ROM 203 is a nonvolatile storage device to store programs and firmware, etc., executed by the CPU 201.

The storage device 204 is a readable and writable non-volatile storage device that stores an operation system (OS), various applications, programs, setting information, various data, and the like that cause the fabricating apparatus 100 to function. The interface 205 is a device to connect the fabricating apparatus 100 to another apparatus. The interface 205 can be connected to, for example, the information processing terminal 150, a network, and an external storage device. The fabricating apparatus 100 can receive control data of fabricating operation, shape data of three-dimensional objects, and the like via the interface 205.

The fabricating device 206 is a device that fabricates a fabrication layer based on fabrication data as fabricator. The fabricating device 206 includes the head 110, the stage 120, and the like, and is configured in accordance with a fabrication method. For example, the fabricating device 206 of an FFF system includes a heating mechanism to melt the fabrication material 140, a nozzle to discharge the fabrication material 140, and so on.

The shape sensor 207 is a device that measures the shape of the fabrication layer during fabrication or the three-dimensional object after fabrication. The shape sensor 207 may measure the xy plane of the fabrication layer. The shape sensor 207 may measure, for example, the dimensions in the x-axis, y-axis, and z-axis directions of a three-dimensional object. Examples of the shape sensor 207 include, but not limited to, an infrared sensor, a camera, and a three-dimensional measurement sensor (for example, a light-cutting profile sensor).

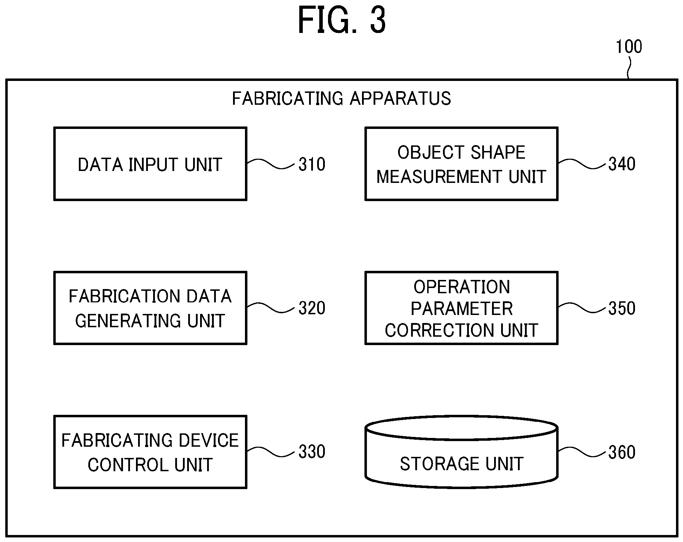

Next, functions implemented by each hardware of the present embodiment are described with reference to FIG. 3. FIG. 3 is a block diagram of software included in the fabricating apparatus 100 according to the present embodiment.

The fabricating apparatus 100 includes a data input unit 310, a fabrication data generating unit 320, a fabricating-device control unit 330, an object shape measurement unit 340, an operation parameter correction unit 350, and a storage unit 360.

The data input unit 310 receives input such as shape data to form a three-dimensional object. The shape data is generated by, for example, the information processing terminal 150 and is input to the data input unit 310 via the interface 205.

The fabrication data generating unit 320 divides the shape data input to the data input unit 310 in the height direction of the three-dimensional object, to generate fabrication data of each fabrication layer. The fabrication data generating unit 320 converts the input shape data into fabrication data such that the three-dimensional object has a desired shape. The three-dimensional object to be fabricated is divided in unit of lamination pitch, and the fabrication date is generated as data indicating the shape of a fabrication layer to form each layer to be laminated.

In FIG. 3, the fabrication data generating unit 320 is included in the fabricating apparatus 100. In some embodiments, the fabrication data generating unit 320 may be included in the information processing terminal 150. In such a case, the fabrication data generated by the information processing terminal 150 is transmitted to the fabricating apparatus 100 to execute the fabricating process.

The fabricating-device control unit 330 controls the fabricating process in which the fabricating device 206 operates based on the fabrication data. The fabricating-device control unit 330 adjusts the position of the head 110 and the height of the stage 120 according to the fabrication data so that the fabricating-device control unit 330 can fabricate the three-dimensional object while controlling various algorithms and parameters (hereinafter, operation parameters), such as the discharge amount of the fabrication material 140, the feeding speed of the filament, the moving speed and moving path of the head 110, and the lamination pitch. In addition, the operation parameters can be corrected as appropriate according to the measurement result of the shape of the three-dimensional object.

The object shape measurement unit 340 as a measuring unit controls the shape sensor 207 and measures the shape of a fabrication layer being fabricated and the shape of a dummy fabrication object as measurement data such as dimensions and height. The object shape measurement unit 340 acquires the measurement results as measurement data. The object shape measurement unit 340 can also measure the height of each fabrication layer at xy coordinates to calculate the height distribution of the fabrication layer.

The operation parameter correction unit 350 corrects the operation parameters based on the results measured by the object shape measurement unit 340. Examples of the operation parameters includes the shape of the three-dimensional object to be fabricated, the size and height of each fabrication layer, the fabrication amount based on the fabrication data, the melting temperature of the fabrication material, the moving speed and moving path of the head 110, and the lamination pitch. Since the correction of the operation parameters by the operation parameter correction unit 350 corresponds to the correction of the fabrication data, a three-dimensional object having a desired shape can be fabricated.

The storage unit 360 stores various data, such as shape data, fabrication data, measurement data, setting values of various parameters, and correction data, in the storage device 204. Various data are written to and read from the storage unit 360 by each functional unit.

A highly accurate three-dimensional object can be fabricated by the functional units described above.

The software blocks described above correspond to functional units implemented by the CPU 201 executing programs of the present embodiment to function respective hardware. All the functional units illustrated in each embodiment may be implemented in software, or part or all of the functional units may be implemented as hardware that provides equivalent functions.

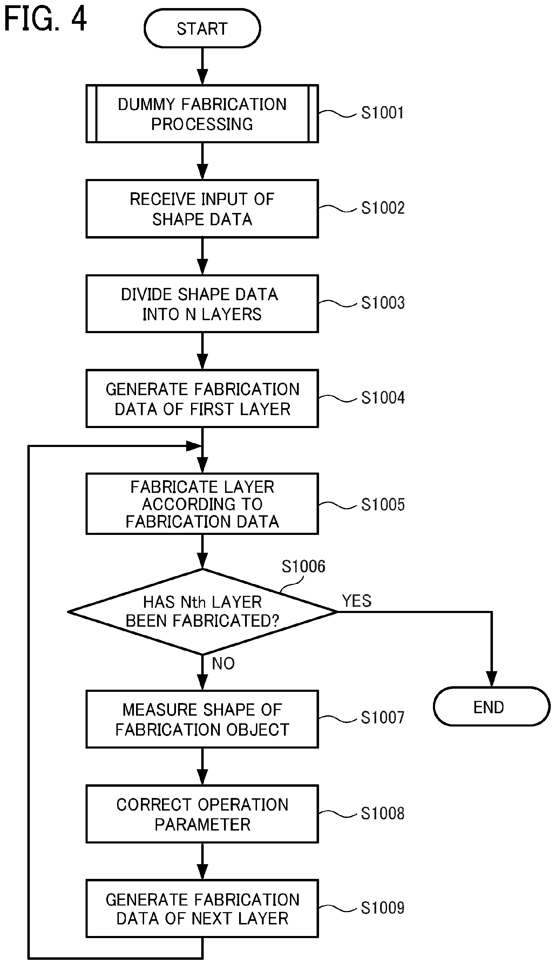

Next, a description is given of processing executed by the fabricating apparatus 100 according to the present embodiment. FIG. 4 is a flowchart of a process in which the fabricating apparatus 100 fabricates a three-dimensional object in the present embodiment.

When the fabricating apparatus 100 starts the process, the fabricating apparatus 100 can perform a dummy fabricating process in step S1001. When the fabricating apparatus 100 performs the dummy fabricating process before the fabricating process of the three-dimensional object, the operation parameters can be appropriately corrected and set, and the accuracy of the three-dimensional object can be enhanced. Note that the dummy fabricating process can be omitted. The dummy fabricating process can also be performed at an arbitrary timing. For example, the dummy fabricating process may be performed while the three-dimensional object is being fabricated, which is described later in detail.

In step S1002, the data input unit 310 receives input of the shape data of the three-dimensional object from the information processing terminal 150. In step S1003, the shape data is divided by the fabrication data generating unit 320. The shape data is divided into pieces of the number of layers N calculated based on the height and the lamination pitch of the three-dimensional object and is divided as slice data indicating the shape of each layer. In step S1004, the fabrication data generating unit 320 generates fabrication data for the first layer of the three-dimensional object based on the divided shape data. The fabrication data is output to the fabricating-device control unit 330.

In step S1005, the fabricating-device control unit 330 controls the fabricating device 206 based on the fabrication data to fabricate the first fabrication layer. In step S1006, the process branches depending on whether the fabrication up to the Nth layer has been performed, that is, all the fabrication layers have been fabricated and the three-dimensional object has been completed. When the fabrication up to the Nth layer has been performed (YES), the fabricating apparatus 100 ends the process. If the fabrication up to the Nth layer has not been performed (NO), the process proceeds to step S1007.

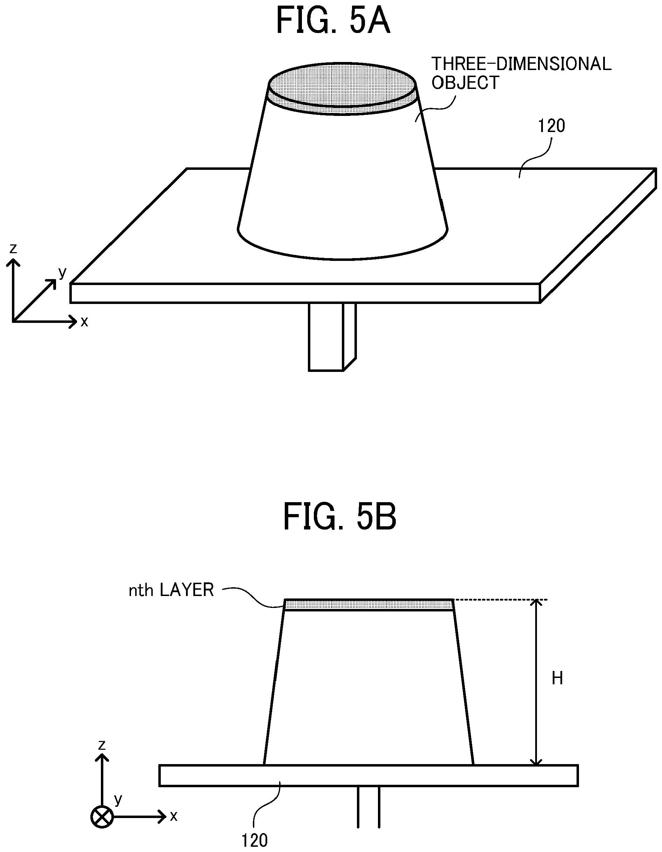

In step S1007, the object shape measurement unit 340 measures the shape of the fabricated three-dimensional object. Here, the measurement of the shape in step S1007 is described with reference to FIGS. 5A and 5B.

FIGS. 5A and 5B are illustrations of the measurement of the height of a three-dimensional object in the present embodiment. FIG. 5A is a perspective view of a three-dimensional object that has been fabricated up to the nth layer on the stage 120. FIG.5B depicts the zx cross section of the three-dimensional object illustrated in FIG. 5A. The object shape measurement unit 340 measures, as the height H, the distance from an upper surface of the stage 120 to an upper surface of the three-dimensional object having been fabricated up to the nth layer. The object shape measurement unit 340 can also scan the upper surface of the three-dimensional object at regular intervals and measure the heights of respective positions at the regular intervals to calculate the height distribution of the fabrication layer of the nth layer. The object shape measurement unit 340 can also measure the shape of the fabrication layer on the xy plane in addition to the height H.

Returning to FIG. 4, after measuring the shape of the fabrication object in step S1007, the operation parameter correction unit 350 corrects the operation parameters in step S1008. The correction of the operation parameters can be performed based on the measurement result in step S1007. For example, when the height of the fabrication layer is lower than the height of a desired three-dimensional shape, the operation parameter correction unit 350 corrects various operation parameters, such as the discharge amount of the fabrication material 140 and the distance from a discharge port to a fabrication surface (so-called "nozzle gap") so that the lamination thickness of the next fabrication layer increases. In some embodiments, for example, a dummy fabricating process similar to the dummy fabricating process in step S1001 may be performed between step S1007 and step S1008.

In step S1009, the fabrication data generating unit 320 generates fabrication data for the next layer of the three-dimensional object based on the divided shape data, as in step S1004. The fabricating apparatus 100 returns to step S1005 and repeats each processing described above until all the fabrication layers are fabricated. As a result, the fabricating apparatus 100 can fabricate the three-dimensional object having a desired shape.

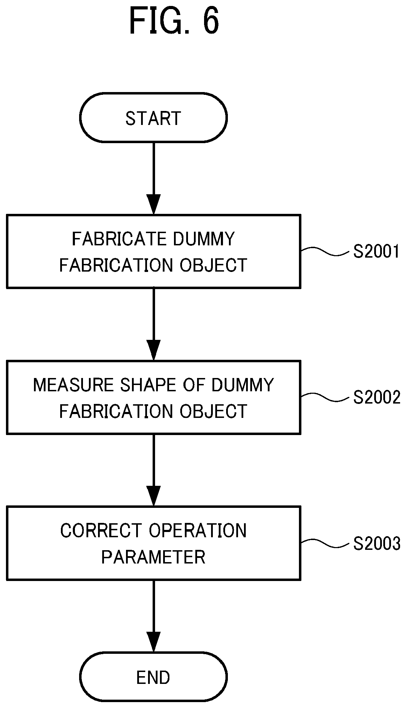

Next, the dummy fabricating process in step S1001 is described. FIG. 6 is a flowchart of the process of correcting the operation parameters by the dummy fabricating process in the present embodiment.

As illustrated in FIG. 6, when the fabricating apparatus 100 starts the dummy fabricating process, in step S2001, the fabricating-device control unit 330 controls the fabricating device 206 based on fabrication data of a dummy fabrication object and fabricates the dummy fabrication object. The fabrication data of the dummy fabrication object can be stored in the storage unit 360 in advance. For example, the dummy fabrication object can have a shape made of one layer or a plurality of layers, but the shape of the dummy fabrication object is not limited to any particular shape.

In step S2002, the object shape measurement unit 340 measures the shape of the fabricated dummy fabrication object. Note that the measurement of the shape in step S2002 is the same as the processing in step S1007.

Next, in step S2003, the operation parameter correction unit 350 corrects the operation parameters based on the measurement result in step S2002. The correction of the operation parameters in step S2003 is the same as the processing in step S 1008. In step S2004, the fabricating apparatus 100 ends the dummy fabricating process.

According to the processes described with reference to the flowcharts of FIGS. 4 and 6, the fabricating apparatus 100 can fabricate a three-dimensional object having a desired shape. Below, embodiments of the present disclosure are further described.

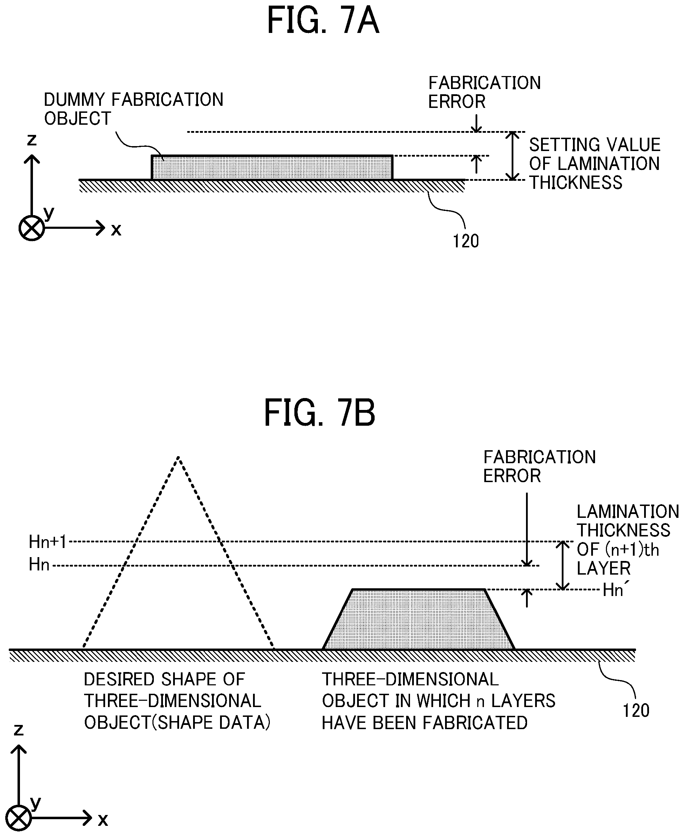

FIGS. 7A and 7B are illustrations of examples of correction of the lamination thickness in the present embodiment. In three-dimensional fabrication, appropriate adjustment of the nozzle gap allows the discharge pressure of the fabrication material 140 and the adhesiveness with a lower layer to be constant, thus stabilizing the fabricating accuracy. Therefore, the nozzle gap is preferably set to a predetermined distance. Hence, in the present embodiment, the nozzle gap is adjusted based on the height distribution of the fabrication layer to correct the operation parameters.

FIG. 7A depicts an example in which a one-layer dummy fabrication object is fabricated. The dummy fabrication object is fabricated with such operation parameters that the thickness of the fabrication layer be equal to a preset lamination-thickness setting value (step S2001). On the other hand, when the shape of the dummy fabrication object illustrated in FIG. 7A is measured (step S2002), the thickness of the fabrication layer of the dummy fabrication object is smaller than the preset lamination thickness value. Therefore, the operation parameter correction unit 350 calculates a difference between the preset lamination-thickness setting value and the thickness of the fabrication layer as a fabrication error and corrects operation parameters such as the nozzle gap based on the fabrication error (step S2003).

FIG. 7B depicts an example of a case in which operation parameters are corrected during fabrication of a three-dimensional object. The shape indicated by a thick broken line on the left side in FIG. 7B represents the input shape data, that is, the shape of the desired three-dimensional object. The shape indicated by a solid line on the right side in FIG. 7B represents the shape of the three-dimensional object that has been fabricated up to the nth layer.

Here, assume that the ideal height of the three-dimensional object to be fabricated based on the shape data is Hn at the time of fabricating up to the nth layer and Hn+1 at the time of fabricating up to the (n+1)th layer. On the other hand, assume that, as illustrated in the right side of FIG. 7B, when the shape of the three-dimensional object actually formed up to the nth layer is measured (step S1007), the height of the three-dimensional object is Hn'. In such a case, the operation parameter correction unit 350 calculates the difference between Hn and Hn' as a fabrication error. The operation parameter correction unit 350 adds the fabrication error to the preset stacking-thickness setting value to obtain the stacking thickness of the (n+1)th layer and corrects the operation parameters so that the height of the three-dimensional object after fabrication of the (n+1)th layer is Hn+1 (step S1008). Thereafter, fabrication data of the (n+1)th layer is generated (step S 1009) and the fabrication processing is performed.

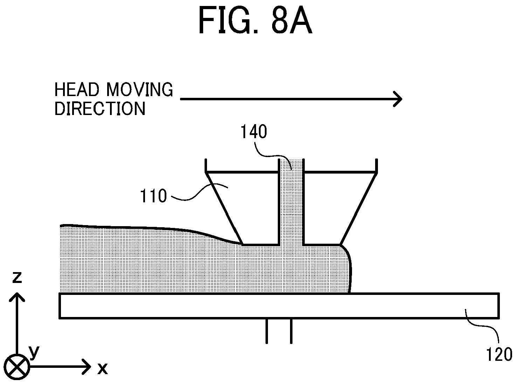

According to the corrections described with reference to FIGS. 7A and FIG. 7B, the fabrication layer can be fabricated with a desired lamination thickness, thus allowing a highly accurate three-dimensional object to be fabricated. In some embodiments, the operation parameters may be corrected in consideration of irregularities generated in the fabricating process of the fabrication layer. FIGS. 8A and 8B-1 to 8B-3 are illustrations of the height distribution on a surface of a fabrication layer in fabricating a three-dimensional object.

FIG. 8A depicts an operation of fabricating a fabrication layer by discharging a melted fabrication material 140 from the discharge port of the head 110 moving in the x-axis direction onto the stage 120. Since the melted fabrication material 140 is pushed out by pressure applied by a filament supplier (extruder), the melted fabrication material 140 swells and solidifies on a rear side in the moving direction of the head 110.

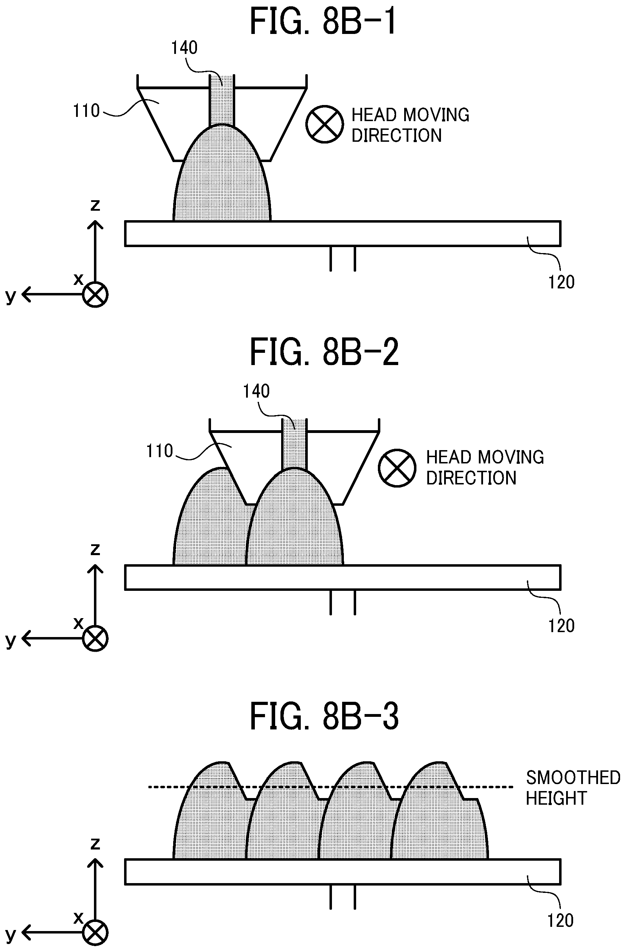

FIGS. 8B-1 to 8B-3 are cross-sectional views of the operation of fabricating the fabrication layer as seen from the x-axis direction. FIG. 8B-1 depicts an operation of fabricating first line drawing constituting the fabrication layer. FIG. 8B-2 depicts an operation of fabricating second line drawing constituting the fabrication layer. When the second line drawing is fabricated in fabricating one fabrication layer, the head 110 may interfere with the first line drawing as illustrated in FIG. 8B-2. In such a case, when the fabrication material 140 of the first line drawing is not solidified, the first line drawing is scraped by the movement of the head 110 and changes from a desired shape.

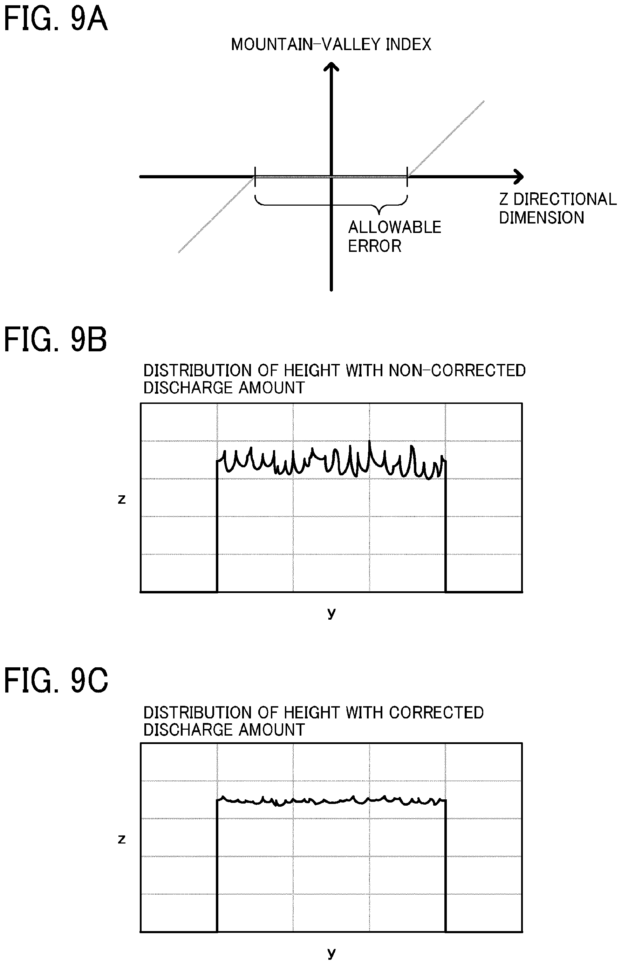

If such a change is repeated and the fabrication layer is fabricated, as illustrated in FIG. 8B-3, unintended irregularities would be generated on the surface of the fabrication layer. As a result, the smoothed height of the fabrication layer would become non-uniform between layers, thus lowering the fabricating accuracy of the three-dimensional object. Hence, in the present embodiment, the operation parameters are corrected according to the height distribution of the surface of the fabrication layer so that the discharge amount is appropriate to maintain the flatness of the surface of the fabrication layer. FIGS. 9A to 9C are diagrams of the correction of the fabrication layer based on the height distribution in the present embodiment.

FIG. 9A depicts a function representing an index for calculating a correction value of a discharge amount based on smoothed height. In the present embodiment, first, the median height of the fabrication layer on the xy plane, that is, the smoothed height as illustrated in FIG. 8B-3 is calculated. The correction value of the discharge amount is calculated based on an index (hereinafter referred to as "mountain-valley index") that indicates whether, with respect to the smoothed height, the dimension (height) of the fabrication layer in the z direction on the xy plane tends to be high (hereinafter referred to as "mountain tendency") or low (hereinafter referred to as "valley tendency").

For example, when the three-dimensional object has a mountain tendency and the mountain-valley index is high, it is determined that the discharge amount is excessive and the three-dimensional object overflows from a predetermined xy plane. In such as case, the operation parameters for fabricating the next layer are corrected so that the discharge amount decreases according to the mountain-valley index in FIG. 9A. Alternatively, when the three-dimensional object has a valley tendency and the mountain-valley index is low, it is determined that the discharge amount is too small and a space is generated between the three-dimensional object and the predetermined xy plane. In such a case, the operation parameters for fabricating the next layer are corrected so that the discharge amount increases in accordance with the mountain-valley index in FIG. 9A. When the mountain-valley index is 0, it is determined that the shape of the three-dimensional object is within an allowable error range, and the correction for increasing or decreasing the discharge amount is not performed.

FIGS. 9B and 9C are graphs of the height distributions of a case in which the discharge amount is corrected and a case in which the discharge amount is not corrected, and correspond to a cross section of the three-dimensional object. In FIGS. 9B and 9C, the height distribution in the y-axis direction at an arbitrary x coordinate is measured and a comparison is made according to whether the discharge amount is corrected and not corrected. As illustrated in FIG. 9C, it was found that the flatness of the surface of the three-dimensional object could be improved by correcting the discharge amount according to the present embodiment. Similarly, when the height distribution was measured at a plurality of other x coordinates, it was confirmed that the flatness of the surface of the three-dimensional object was improved by correcting the discharge amount.

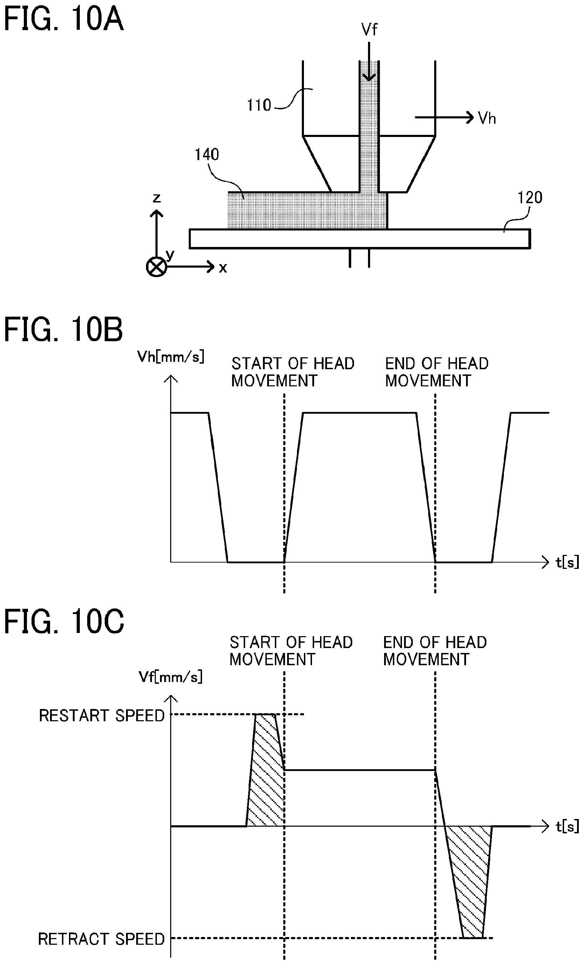

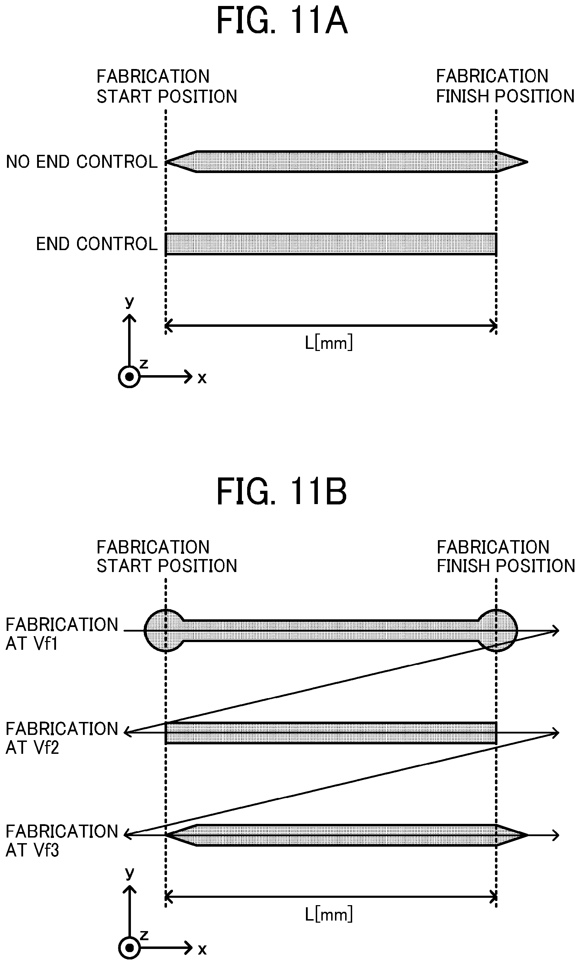

Next, the shape of an end of the path of the head 110 that moves while discharging the fabrication material 140 is described with reference to FIGS. 10A to 10C and FIGS. 11A and 11B. FIGS. 10A to 10C are diagrams of the correction of a fabrication start end and a fabrication finish end according to the present embodiment. FIGS. 11A and 11B are diagrams of the shapes of ends under control of the filament supply speed in the present embodiment. Below, embodiments are described with reference to FIGS. 10A to 10C and FIGS. 11A and 11B as appropriate.

As illustrated in FIG. 10A, the head 110 supplies a filament, which is a raw material of the three-dimensional object, while melting the filament at a supply speed Vf, and moves at a moving speed Vh. When the supply speed of the filament is always constant, the fabrication material 140 runs short in the vicinity of a fabrication start position, and the fabrication material is used for fabrication beyond a fabrication finish position, thus reducing the fabricating accuracy of the three-dimensional object.

Hence, in the present embodiment, correction for controlling the filament supply speed is performed at both end portions in fabrication of a line drawing shape. For example, at a fabrication start end, a "restart operation" is performed to increase the filament supply speed immediately before the fabrication is started, and at a fabrication finish end, a "retract operation" is performed to pull back the filament. FIGS. 10B and 10C depict the time change of the head moving speed and the time change of the filament supply speed, respectively.

As illustrated in FIGS. 10B and 10C, immediately before the head 110 moves, the restart operation for supplying the filament at a speed higher than a normal speed is performed to compensate for the lack of the fabrication material 140 in the vicinity of the fabrication start end. In addition, after the head 110 finishes moving, the filament supply speed is made negative, that is, the retract operation for pulling back the filament is performed to restrain an excess of the amount of the fabrication material 140 at the fabrication finish end.

FIG. 11A depicts the difference in the shapes of ends of fabrication depending on whether the restarting operation and the retracting operation are performed. FIG. 11A is a top view of an example in which line drawing of length L is fabricated. When end control is not performed as illustrated in an upper part of FIG. 11A, the shape in the vicinity of the fabrication start end is narrowed, and the line drawing is fabricated beyond the fabrication finish position. Accordingly, a desired shape is not fabricated. When such line drawing is repeated and a three-dimensional object is fabricated, a desired three-dimensional object is not obtained.

On the other hand, when end control is performed as illustrated in a lower part of FIG. 11A, line drawing can be appropriately fabricated from the fabrication start position to the fabrication finish position, and a desired length can be obtained. Thus, a desired three-dimensional object can be fabricated.

By the way, when performing appropriate end control as described above, it is preferable to correct the restart speed and retract speed of the filament. Therefore, in the present embodiment, the dummy fabricating process can be performed before or during the fabrication of the three-dimensional object to correct the operation parameters. FIG. 11B depicts an example in which dummy fabrication of end-controlled line drawing is performed to correct the filament supply speed to an appropriate speed.

Arrows in FIG. 11B indicate the moving path of the head 110. Here, an example is illustrated in which dummy fabrication of a line drawing of length L is performed at three values in restart speed and retract speed. The object shape measurement unit 340 measures the shape of the dummy fabrication object and sets appropriate conditions such as length and width as operation parameters during fabrication.

For example, when the restart speed and the retract speed are Vf1 (upper part in FIG. 11B) or Vf3 (lower part in FIG. 11B), the shape of the line drawing is not uniform and is inappropriate as an operation parameter. On the other hand, when the restart speed and the retract speed are Vf2 (middle part in FIG. 11B), the shape of the line drawing is uniform and therefore correction is performed to set Vf2 as an operation parameter during fabrication. Thus, a desired three-dimensional object can be fabricated.

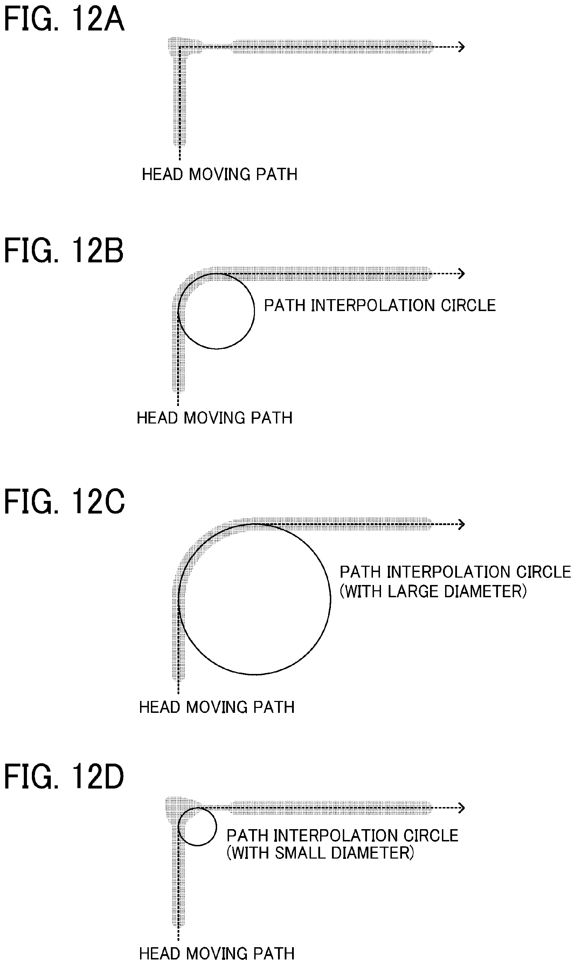

Next, with reference to FIGS. 12A to 12D, a description is given of the shape in the vicinity of a bent portion and the correction of the shape when the moving path of the head 110 is bent. FIGS. 12A to 12D are diagrams of correction of a moving path of the head 110 in the present embodiment. Arrow represented by a broken line in each of FIGS. 12A to 12D indicates a moving path of the head 110. As illustrated in FIG. 12A, when the moving path of the head 110 is bent at a certain angle or less, the head 110 is accelerated and decelerated in the vicinity of a bending point. In such a case, since the control of the discharge amount cannot follow the acceleration and deceleration of the head 110 in the vicinity of the bending point, the control of the discharge amount of the fabrication material 140 is not properly performed. Accordingly, the fabrication material 140 may overflow or runs short, thus hampering formation of the desired shape.

Hence, in the present embodiment, as illustrated in FIG. 12B, the moving path of the head 110 is corrected to restrain acceleration and deceleration of the head 110 in the vicinity of the bending point. In FIG. 12B, the moving path of the head 110 is corrected to be along the circumference of a path interpolation circle inscribed in the moving path in the vicinity of the bending point.

In general, as the radius of the path interpolation circle is larger, the fabrication material 140 is less likely to overflow or lack. On the other hand, when the radius of the path interpolation circle is increased, the corrected moving path is deviated from the original moving path, thus hampering a desired shape to be formed. Hence, in the present embodiment, dummy fabrication is performed with path interpolation circles having various radii and a path interpolation circle having an appropriate radius is set based on the shape of a dummy fabrication object measured by the object shape measurement unit 340, thus allowing the correction of operation parameters.

For example, when a shape bent at a right angle is fabricated as illustrated in FIG. 12A, dummy fabrication is performed on the shapes corrected by the three types of path interpolation circles illustrated in FIGS. 12B to 12D. For example, in the case of correcting with a path interpolation circle having a large radius as illustrated in FIG. 12C, the corrected shape largely deviates from the right-angle shape, thus hampering formation of the desired three-dimensional object. Alternatively, in the case of correcting with a path interpolation circle having a small radius as illustrated in FIG. 12D, the shape in the vicinity of the bending point is close to a right angle and therefore the fabrication material 140 is overflowed or insufficient, thus hampering formation of the desired three-dimensional object.

Hence, among dummy fabrications in which the overflow or lack of the fabrication material 140 does not occur, the operation parameter is corrected based on a dummy fabrication performed with a path interpolation circle having the smallest radius. That is, in the example of FIGS. 12A to 12D, the operation parameter correction unit 350 corrects the moving path on the assumption that the radius of the path interpolation circle illustrated in FIG. 12B is appropriate. Thus, a desired three-dimensional object can be fabricated.

As described above, according to embodiments of the present disclosure, there can be provided the fabricating apparatus, a fabricating system, a fabricating method, and a carrier medium carrying program code that fabricate a desired three-dimensional object.

Each function of each embodiment of the present disclosure described above can be realized by a device-executable program written in C, C ++, C #, Java (registered trademark) or the like. Programs to achieve each function in the each embodiment can be stored and distributed in a device-readable recording medium, such as a hard disk device, a compact disc-read only memory (CD-ROM), a magneto-optical disc (MO), a digital versatile disc (DVD), a flexible disk, an electrically erasable and programmable read only memory (EEPROM), an erasable programmable read only memory (EPROM), etc., and can be transmitted via a network in a format that other devices can use.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a TCP/IP signal carrying computer code over an IP network, such as the Internet. The carrier medium may also include a storage medium for storing processor readable code such as a floppy disk, hard disk, CD ROM, magnetic tape device or solid state memory device.

## Claims

1. A fabricating apparatus (100) for fabricating a three-dimensional object, the apparatus comprising:
a fabricating device (206) configured to fabricate a fabrication layer based on fabrication data of the three-dimensional object;
a measuring unit (340) configured to measure a shape of the fabrication layer; and
a correction unit (350) configured to correct an operation of fabricating another fabrication layer above the fabrication layer, based on a height of the fabrication layer measured by the measuring unit (340).

2. The fabricating apparatus (100) according to claim 1,
wherein the measuring unit (340) measures heights of the fabrication layer at a plurality of coordinates and calculates a height distribution, and
the correction unit (350) corrects the operation based on the height distribution.

3. The fabricating apparatus (100) according to claim 1 or 2,
wherein the fabricating device (206) fabricates a dummy fabrication object, and
the correction unit (350) corrects an operation of fabricating the three-dimensional object based on a shape of the dummy fabrication object.

4. The fabricating apparatus (100) according to claim 3,
wherein the fabricating device (206) fabricates the dummy fabrication object at at least one timing of before fabricating the three-dimensional object and during fabricating of the three-dimensional object.

5. The fabricating apparatus (100) according to any one of claims 1 to 4,
wherein the correction unit (350) corrects an amount of a fabrication material constituting the fabrication layer.

6. The fabricating apparatus (100) according to any one of claims 1 to 5,
wherein the correction unit (350) corrects a distance between the fabricating device (206) and a position at which the three-dimensional object is fabricated by the fabricating device (206).

7. The fabricating apparatus (100) according to any one of claims 1 to 6,
wherein the correction unit (350) corrects a fabrication amount at a fabrication start end and a fabrication finish end based on the shape of the fabrication layer measured by the measuring unit (340).

8. The fabricating apparatus according to any one of claims 1 to 7,
wherein the correcting unit (350) corrects a shape of a bent portion based on the shape of the fabrication layer measured by the measuring unit (340).

9. A system for fabricating a three-dimensional object, the system comprising the fabricating apparatus (100) according to any one of claims 1 to 8.

10. A method for fabricating a three-dimensional object, the method comprising:
fabricating a fabrication layer based on fabrication data of the three-dimensional object;
measuring a shape of the fabrication layer; and
correcting an operation of fabricating another fabrication layer above the fabrication layer to fabricate said another fabrication layer.

11. A carrier medium carrying computer readable program code for controlling an apparatus for fabricating a three-dimensional object to carry out the method of claim 10.
